# EUROPEAN PATENT APPLICATION

(11) **EP 4 614 657 A1**
(43) Date of publication of application: **10.09.2025**
(21) Application number: 23903780.7
(22) Date of filing: 15.11.2023
(51) Int. Cl.: H01M 10/0585, H01M 10/04, H01M 10/052

(54) **BATTERY AND ELECTRONIC DEVICE COMPRISING SAME**

(30) Priority: 14.12.2022 KR 20220175210; 09.01.2023 KR 20230002895
(71) Applicant: Samsung Electronics Co., Ltd., Suwon-si, Gyeonggi-do 16677 (KR)
(72) Inventor: KIM, Shihyun, Suwon-si Gyeonggi-do 16677 (KR); PARK, Seonyoung, Suwon-si Gyeonggi-do 16677 (KR); PARK, Tari, Suwon-si Gyeonggi-do 16677 (KR); JUNG, Sinyoung, Suwon-si Gyeonggi-do 16677 (KR); CHU, Jungho, Suwon-si Gyeonggi-do 16677 (KR)
(74) Representative: Gulde & Partner
(86) International application number: PCT/KR2023/018324
(87) International publication number: WO 2024/128577

(57) **Abstract**

In an electronic device including a battery, according to one embodiment of the present specification, the battery comprises a battery stack and a battery receptor for accommodating the battery stack, wherein the battery stack comprises a plurality of electrode layers and a plurality of separation layers arranged between the plurality of electrode layers, the plurality of electrode layers comprise a plurality of outer electrode layers and a plurality of inner electrodes arranged between the plurality of outer electrode layers, the plurality of outer electrode layers include an active material arranged on respective inner surfaces thereof, the plurality of outer electrode layers include pressing patterns arranged on respective outer surfaces thereof, and the battery receptor is in physical contact with the pressing patterns, and accommodates the battery stack so as to continuously apply force to the battery stack in the height direction.

## Description

### [TECHNICAL FIELD]

Various embodiments of the disclosure of the disclosure relate to a battery and an electronic device including the same.

### [BACKGROUND ART]

A battery equipped in an electronic device may be formed in a stack structure in which positive and negative electrode layers are alternately stacked. A battery having a stack structure may be composed of a positive electrode layer, a negative electrode layer, and an intermediate layer separating the positive electrode layer and the negative electrode layer. Active materials corresponding to the respective polarities may be applied to the positive and negative electrode layers, respectively. A positive electrode active material may be applied to the metal substrate of the positive electrode layer, and a negative electrode active material may be applied to the metal substrate of the negative electrode layer. The active material needs to be applied on the metal substrate in a substantially uniform thickness to maintain adhesion between the layer structures (e.g., the positive electrode layer, the negative electrode layer, and the intermediate layer).

### [DISCLOSURE OF INVENTION]

### [SOLUTION TO PROBLEMS]

In accordance with an aspect of the disclosure, an electronic device is provided. The electronic device includes a battery including a battery stack, and a battery receptor receiving the battery stack, wherein the battery stack includes a plurality of electrode layers and a plurality of separation layers disposed between the plurality of electrode layers, wherein the plurality of electrode layers include a plurality of external electrode layers and a plurality of internal electrode layers disposed between the plurality of external electrode layers, wherein an active material is disposed on an inner surface of each of the plurality of external electrode layers, and a pressurizing pattern is disposed on an outer surface of each of the plurality of external electrode layers, and wherein the battery receptor receives the battery stack to physically contact the pressurizing pattern and continuously apply a force in an inner surface direction to the battery stack.

In accordance with another aspect of the disclosure, a battery is provided. The battery includes a battery stack, and a battery receptor receiving the battery stack, wherein the battery stack includes a plurality of electrode layers and a plurality of separation layers disposed between the plurality of electrode layers, wherein the plurality of electrode layers include a plurality of external electrode layers and a plurality of internal electrode layers disposed between the plurality of external electrode layers, wherein an active material is disposed on an inner surface of each of the plurality of external electrode layers, and a pressurizing pattern is disposed on an outer surface of each of the plurality of external electrode layers, and wherein the battery receptor receives the battery stack to physically contact the pressurizing pattern and continuously apply a force in an inner surface direction to the battery stack.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [BRIEF DESCRIPTION OF DRAWINGS]

FIG. 1 is a view illustrating an electronic device in a network environment according to various embodiments;
FIG. 2 illustrates a battery stack according to an embodiment;
FIG. 3 illustrates a battery in which the battery stack of FIG. 2 is surrounded by a pouch according to an embodiment;
FIGS. 4 and 5 are views illustrating an external electrode layer before a punching process;
FIG. 6 is a view illustrating two opposite surfaces of an external electrode layer manufactured by a punching process;
FIGS. 7A and 7B are perspective views illustrating a battery including an external electrode layer; and
FIG. 8 is a cross-sectional view taken along A-A' of FIGS. 7A and 7B.

Reference may be made to the accompanying drawings in the following description, and specific examples that may be practiced are shown as examples within the drawings. Other examples may be utilized and structural changes may be made without departing from the scope of the various examples.

### [MODE FOR INVENTION]

Hereinafter, embodiments of the disclosure are described in detail with reference to the drawings so that those skilled in the art to which the disclosure pertains may easily practice the disclosure. However, the disclosure may be implemented in various different forms and is not limited to the embodiments described herein. The same or similar reference denotations may be used to refer to the same or similar elements throughout the specification and the drawings. Further, for clarity and brevity, no description is made of well-known functions and configurations in the drawings and relevant descriptions.

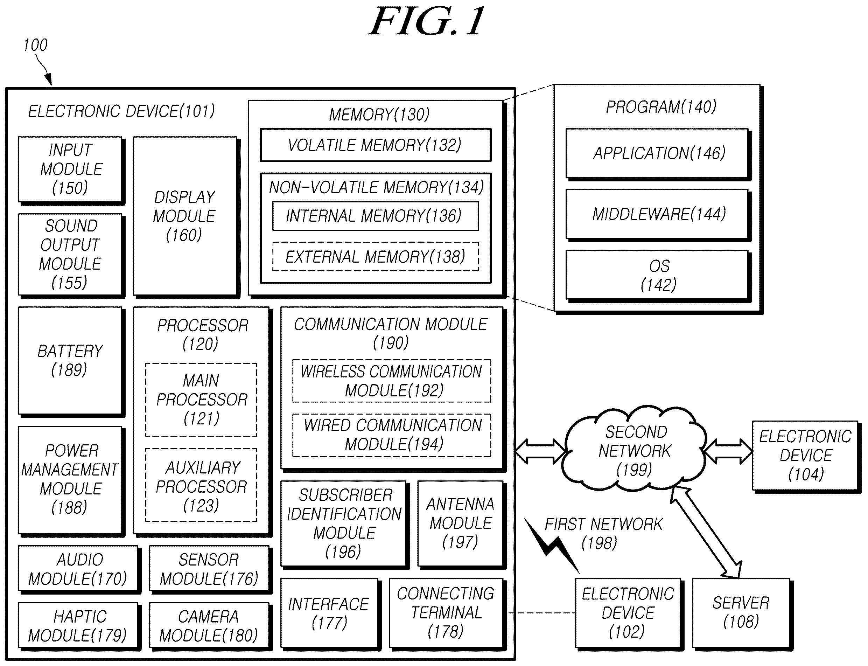

FIG. 1 is a view illustrating an electronic device in a network environment according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a fifth generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102 or 104 or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

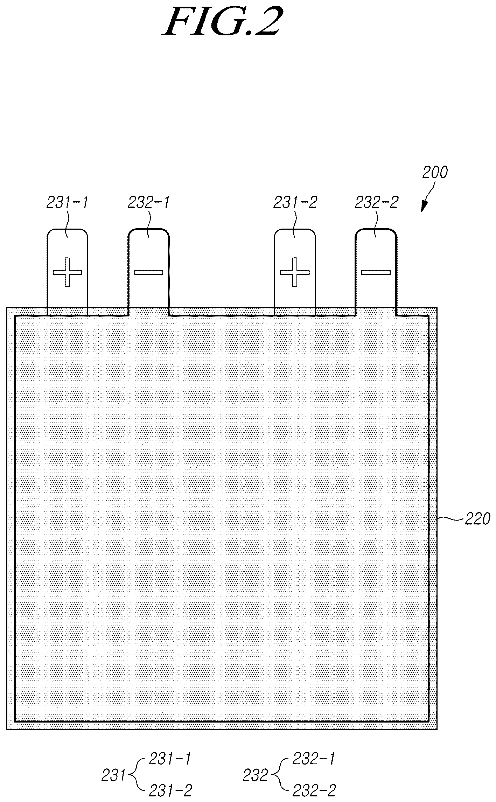

FIG. 2 illustrates a battery stack according to an embodiment.

Specifically, FIG. 2 illustrates a battery stack constituting at least a portion of a battery according to various embodiments of the disclosure. Referring to FIG. 2, the battery stack 200 may include a positive electrode (not illustrated), a negative electrode (not illustrated), a separation layer 220, a positive electrode tab 231 (e.g., a first positive electrode tab 231-1, a second positive electrode tab 231-2), and a negative electrode tab 232 (e.g., a first negative electrode tab 232-1 and a second negative electrode tab 232-2). The positive electrode may include a positive electrode substrate and a positive electrode active material applied to at least one surface of the positive electrode substrate. The negative electrode may include a negative electrode substrate and a negative electrode active material applied to at least one surface of the negative electrode substrate. Components included in the battery stack 200 may not be limited to the components illustrated in FIG. 2. For example, the battery stack 200 may include a binder or a conductive material applied to the positive electrode substrate and the negative electrode substrate.

According to an embodiment, the positive electrode substrate may be formed of aluminum, stainless steel, titanium, copper, silver, or a metal that is a combination of materials selected therefrom. The positive electrode active material may be applied to the surface of the positive electrode substrate. For example, the positive electrode active material may be applied to one side or two opposite sides of the positive electrode substrate.

According to an embodiment, the positive electrode active material may be formed of a material capable of reversibly intercalating and deintercalating lithium ions. For example, the positive electrode active material may include at least one material selected from the group consisting of lithium transition metal oxides such as lithium cobalt oxide, lithium nickel oxide, lithium nickel cobalt oxide, lithium nickel cobalt aluminum oxide, lithium nickel cobalt manganese oxide, lithium manganese oxide, and lithium iron phosphate, nickel sulfides, copper sulfides, sulfur, iron oxides, and vanadium oxides.

According to an embodiment, a binder (not illustrated) and a conductive material (carbon additive) (not illustrated) in addition to the positive electrode active material may be further applied to the surface of the positive electrode substrate. The conductive material may refer to fine powdered carbon added in a small amount to enhance conductivity between active material particles or with a metal current collector in the electrode and prevent the binder from acting as a non-conductor.

According to an embodiment, the binder may include at least one material selected from the group consisting of polyvinylidene fluoride-containing binders, such as polyvinylidene fluoride, vinylidene fluoride/hexafluoropropylene copolymer, or vinylidene fluoride/tetrafluoroethylene copolymer, carboxymethyl cellulose-containing binders, such as sodium-carboxymethyl cellulose or lithium-carboxymethyl cellulose, acrylate-containing binders, such as polyacrylic acid, lithium-polyacrylic acid, acrylic, polyacrylonitrile, polymethyl methacrylate, or polybutylacrylate, polyimide-imides, polytetrafluoroethylene, polyethylene oxide, polypyrrole, lithium-Nafion, and styrene butadiene rubber-containing polymers.

According to an embodiment, the conductive material may include at least one material selected from the group consisting of carbon-containing conducting agents such as carbon black, carbon fiber, and graphite, conductive fiber such as metal fiber, metal powder such as carbon fluoride powder, aluminum powder, and nickel powder, conductive whiskers such as zinc oxides and potassium titanate, and conductive metal oxides such as titanium oxides, and conductive polymers such as polyphenylene derivatives.

According to an embodiment, the negative electrode substrate may be formed of at least one metal selected from the group consisting of copper, stainless steel, nickel, aluminum, and titanium. The negative electrode active material may be applied to the surface of the negative electrode substrate. For example, the negative electrode active material may be applied to one surface or two opposite sides of the positive electrode substrate.

According to an embodiment, the negative electrode active material may be formed of a material capable of forming an alloy together with lithium or a material capable of reversibly intercalating and deintercalating lithium. For example, the negative electrode active material may include at least one material selected from the group consisting of metals, carbon-containing materials, metal oxides, and lithium metal nitrides.

According to an embodiment, the metal may include at least one material selected from the group consisting of lithium, silicon, magnesium, calcium, aluminum, germanium, tin, lead, arsenic, antimony, bismuth, silver, gold, zinc, cadmium, mercury, copper, iron, nickel, cobalt, and indium.

According to an embodiment, the carbon-containing material may include at least one material selected from the group consisting of graphite, graphite carbon fiber, coke, mesocarbon microbeads (MCMBS), polyacene, pitch-derived carbon fiber, and hard carbon.

According to an embodiment, the metal oxide may include at least one selected from the group consisting of lithium titanium oxides, titanium oxides, molybdenum oxides, niobium oxides, iron oxides, tungsten oxides, tin oxides, amorphous tin oxide composites, silicon monoxide, cobalt oxides, and nickel oxides.

According to an example, in addition to the negative electrode active material, a binder and a conductive material may be further applied to the surface of the negative electrode substrate. The binder and the conductive material may be identical or similar to the binder and the conductive material applied to the positive electrode substrate.

According to an embodiment, the separation layer 220 may be disposed between the positive electrode substrate and the negative electrode substrate, and insulate the positive electrode substrate and the negative electrode substrate from each other. For example, the separation layer 220 may be formed of a porous polymer membrane such as a polyethylene or polypropylene membrane.

The positive electrode substrate or the negative electrode substrate may be formed of a flexible substrate, but the disclosure is not limited thereto. In the case, the positive electrode substrate or the negative electrode substrate may contain a flexible material as at least a portion thereof, and the battery stack with the flexible positive electrode substrate or the negative electrode substrate may be bent in at least a partial area.

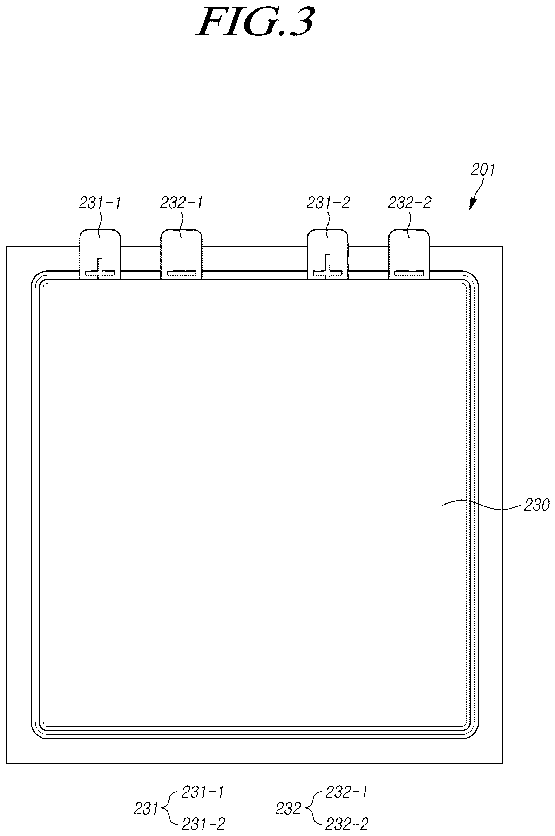

FIG. 3 illustrates a battery in which the battery stack of FIG. 2 is surrounded by a pouch according to an embodiment.

Referring to FIG. 3, the battery 201 may include a battery stack (e.g., the battery stack 200 of FIG. 2) and a battery receptor 230. The battery stack 200 may be received in the battery receptor 230 to form the battery 201. According to an embodiment, a portion of the positive electrode tab (e.g., the first positive electrode tab 231-1 and the second positive electrode tab 231-2) and the negative electrode tab (e.g., the first negative electrode tab 232-1 and the second negative electrode tab 232-2) may be exposed to the outside of the battery receptor 230.

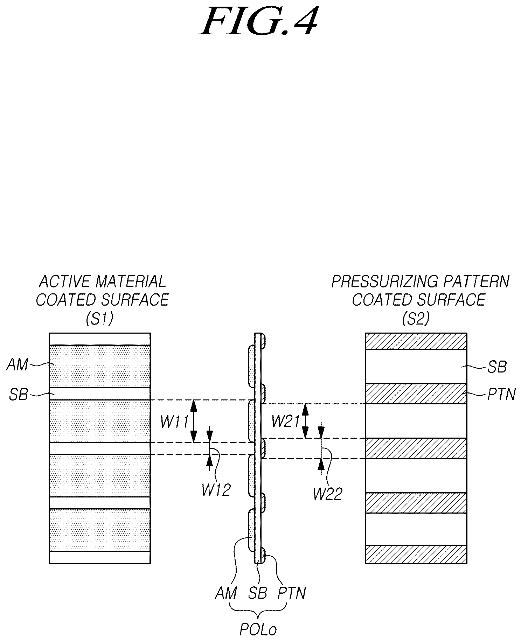

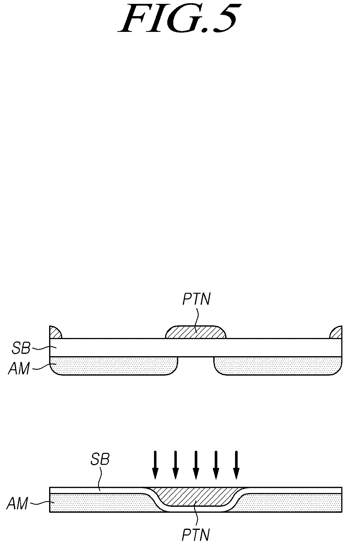

FIGS. 4 and 5 are views illustrating an external electrode layer before a punching process.

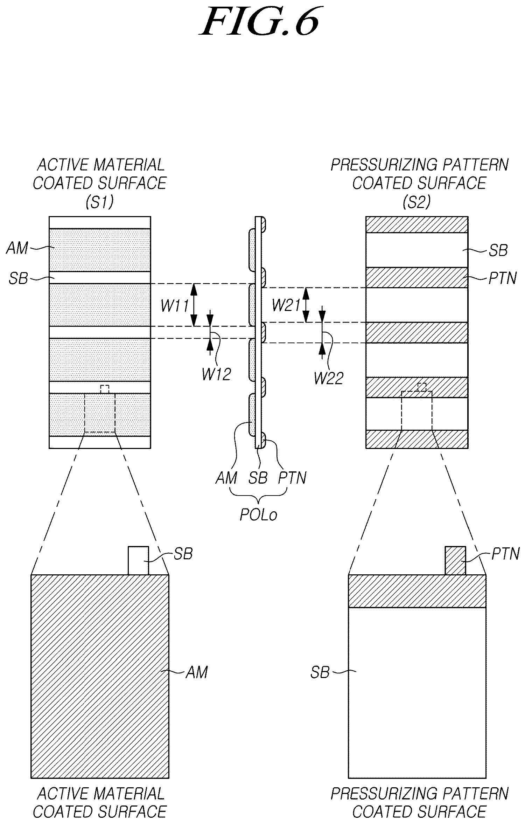

Referring to FIG. 4, the external electrode layer before the punching process according to the disclosure may be referred to as a 'starting external electrode layer' or a 'prepared external electrode layer'. As is described below with reference to FIG. 6, at least a portion of the starting external electrode layer is punched, so that the external electrode layer POLo applied to various embodiments of the disclosure may be separated. For convenience of description, in FIGS. 4 and 5, the external electrode layer before the punching process is also referred to and described as an external electrode layer.

The external electrode layer POLo may include a metal substrate SB, an active material AM, and a pressurizing pattern PTN. The active material AM may be disposed on one surface of the metal substrate SB, and the pressurizing pattern PTN may be disposed on the other surface of the metal substrate SB. Then, the external electrode layer POLo may be separated by the punching process, and the other surface of the external electrode layer on which the pressurizing pattern PTN is formed may be disposed to face the outside of the battery stack. Hereinafter, in the disclosure, the inner surface of the external electrode layer POLo refers to a surface in contact with the internal electrode layer of the battery stack, and the outer surface of the external electrode layer POLo refers to a surface facing the battery receptor 230 of FIG. 3. The active material AM may be any one of the positive electrode active materials and negative electrode active materials described with reference to FIG. 2. The metal substrate SB may be either a positive electrode substrate or a negative electrode substrate. The pressurizing pattern PTN may be an insulating material.

The active material AM may be at least partially disposed on the inner surface of the external electrode layer POLo. On the inner surface, the active materials AM may be repeatedly disposed at predetermined intervals. For example, the active materials AM may be repeatedly disposed with a width of a 1-1th length w11, with a 1-2th length w12 therebetween. Further, the active material AM may have a width of the 1-1th length w11 and may extend along the horizontal direction.

The pressurizing pattern PTN may be at least partially disposed on the outer surface of the external electrode layer POLo. On the outer surface, the pressurizing patterns PTN may be repeatedly disposed at predetermined intervals. For example, the pressurizing patterns PTN may be repeatedly disposed with a width of a 2-2th length w22, with a 2-1th length w21 therebetween. Further, the pressurizing pattern PTN has a width of the 2-2th length w22 and may extend along the horizontal direction. The pressurizing pattern PTN may be formed to extend along substantially the same horizontal direction as the active material AM.

The active material AM and the pressurizing pattern PTN may be formed to partially overlap each other.

The 1-1th length w11 defining a width of the active material AM may be larger than the 2-1th length w21 which is an interval between the pressurizing patterns PTN. The area corresponding to the width of the active material AM may overlap an area corresponding to the interval between the pressurizing patterns PTN with respect to a horizontal direction. The area corresponding to the interval between the pressurizing patterns PTN may entirely overlap the area corresponding to the width of the active material AM with respect to the horizontal direction.

The 2-2th length w22 defining a width of the pressurizing pattern PTN may be larger than the 1-2th length w12 which is an interval between active materials AM, but is not limited thereto, and the 2-2th length w22 may be smaller than the 1-2th length w12. The area corresponding to the width of the pressurizing pattern PTN may overlap the area corresponding to the interval between the active materials AM with respect to the horizontal direction. The area corresponding to the interval between the active materials AM may entirely overlap the area corresponding to the width of the pressurizing pattern PTN with respect to the horizontal direction.

Meanwhile, the 1-1th length w11 defining the width of the active material AM may be larger than the 1-2th length w12 defining the interval between the active materials AM. The 2-2th length w22 defining the width of the pressurizing pattern PTN may be smaller than the 2-1th length w21 defining the interval between the pressurizing patterns PTN.

Referring to FIG. 5, external force may be applied on the pressurizing pattern. The pressurizing pattern may be disposed on the outer surface of the metal substrate. The pressurizing pattern may be first subjected to the external force applied vertically on the outer surface. When the force in the vertical direction is applied to the pressurizing pattern, the pressurizing pattern, together with the metal pattern, may be introduced between the active materials along the direction of the force.

FIG. 5 illustrates that the pressurizing pattern is entirely introduced between the active materials, but various embodiments of the specification are not limited to such illustrated examples. According to various embodiments of the disclosure, a pressurizing pattern may be partially introduced between the active materials, along the direction of the force.

FIG. 6 is a view illustrating two opposite surfaces of an external electrode layer manufactured by a punching process.

FIG. 6 illustrates two opposite surfaces of the external electrode layer separated from the respective corresponding portions of the inner surface and the outer surface of the external electrode layer. Referring to FIG. 6, the starting external electrode layer is substantially the same as the starting external electrode layer described above with reference to FIG. 4, and a redundant description thereof is omitted.

Referring to FIGS. 4 and 6, the inner surface S1 of the external electrode layer may be an active material surface (or an active material coated surface), and the outer surface S2 of the external electrode layer may be a pressurizing pattern surface (or a pressurizing pattern coated surface).

The external electrode layer POLo may be separated in a predetermined shape from the starting external electrode layer POLo. The predetermined shape may include a planar shape and a protruding shape.

In the inner surface S1 of the external electrode layer POLo, a portion corresponding to the planar shape may have the active material AM disposed thereon, and a portion corresponding to the protruding shape may be a positive electrode tab.

In the outer surface S2 of the external electrode layer POLo, a portion of the portion corresponding to the planar shape and the portion (patterned portion) corresponding to the protruding shape may have the pressurizing pattern PTN disposed thereon, and the rest (non-patterned portion) may have the electrode substrate SB protruding outward.

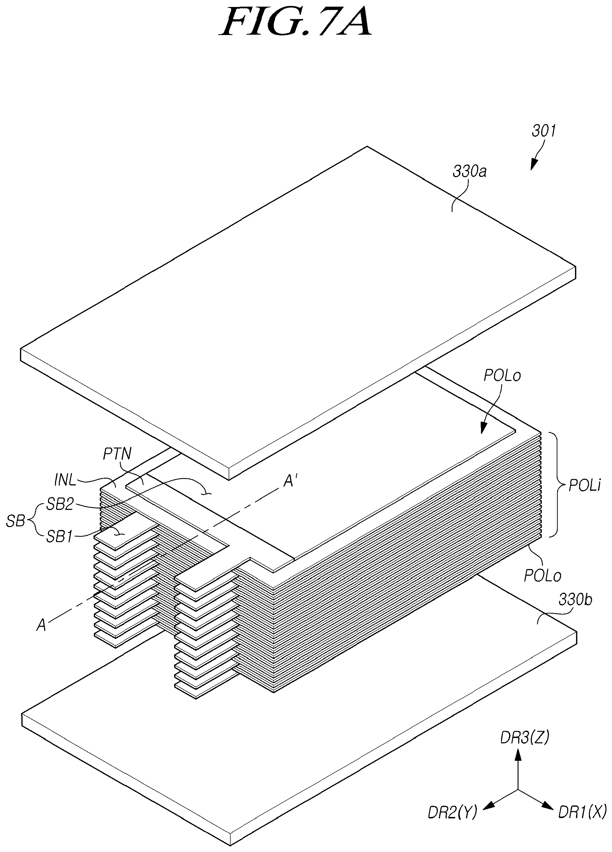

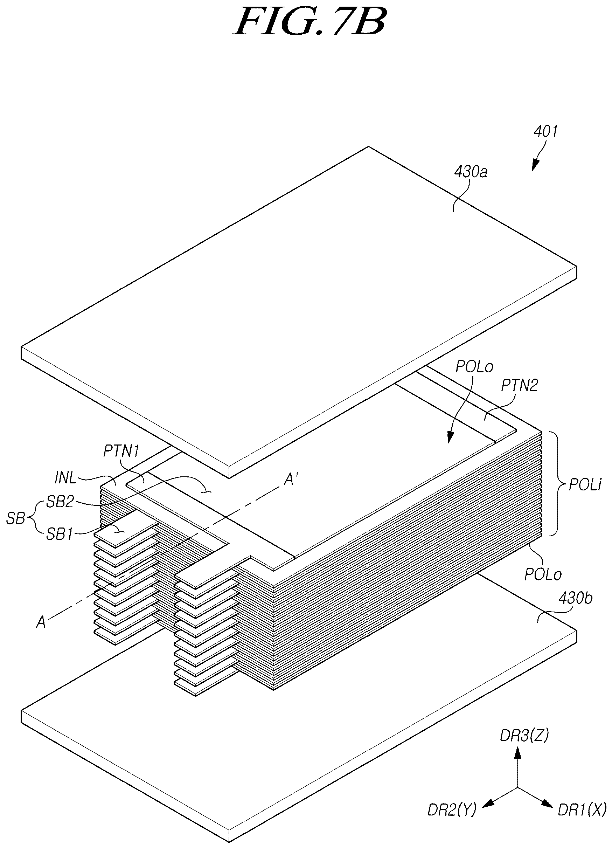

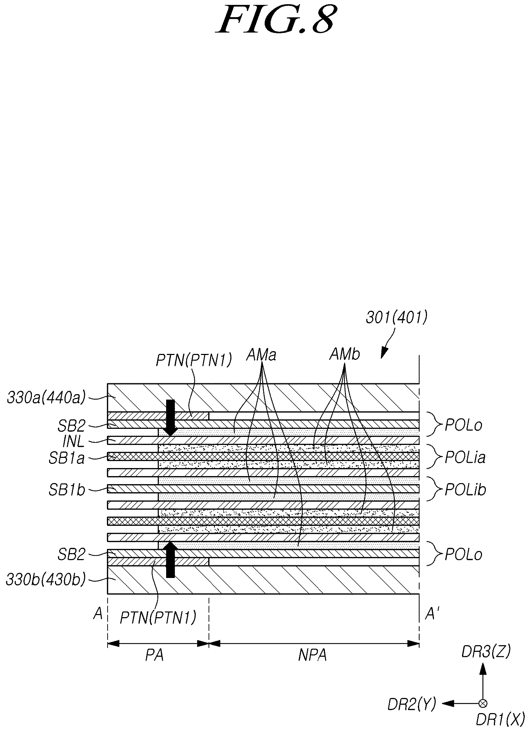

FIG. 7A and FIG. 7B are perspective views illustrating a battery including an external electrode layer, and FIG. 8 is a cross-sectional view taken along A-A' of FIG. 7A and FIG. 7B.

The batteries illustrated in FIGS. 7A, 7B, and 8 include a battery stack (e.g., the battery stack 200 of FIG. 2) having an external electrode layer as described with reference to FIGS. 4 to 6. Since the external electrode layer is substantially the same as that described with reference to FIGS. 4 to 6, a redundant description is skipped. Meanwhile, FIGS. 7A, 7B, and 8 may be described with respect to first to third directions DR1 to DR3. The first and second directions DR1 and DR2 may be the horizontal and vertical directions, respectively, mentioned in FIGS. 4 to 6. The third direction DR3 may be understood as a height direction for convenience of description.

Referring to FIGS. 7A and 7B, in an embodiment of the disclosure, the battery 301, 401 may include a battery stack and a battery receptor 330a, 330b, 430a, 430b. The battery stack may include a plurality of electrode layers and separation layers INL disposed between the electrode layers. The plurality of electrode layers may be divided into positive electrode layers and negative electrode layers according to their polarity. Further, the plurality of electrode layers may be divided into external electrode layers POLo and internal electrode layers POLi according to the disposition position.

In an embodiment, the battery stack may include a plurality of external electrode layers POLo, and a plurality of internal electrode layers POLi disposed between the external electrode layers POLo and separation layers INL.

The external electrode layer POLo may include an external metal substrate SB2, an active material disposed on an inner surface of the external metal substrate SB2, and a pressurizing pattern PTN, PTN1, PTN2 disposed outside. The external metal substrate SB2 may be either a positive electrode substrate or a negative electrode substrate. When the external metal substrate SB2 is a positive electrode substrate, the active material disposed is a positive electrode active material. When the external metal substrate SB2 is a negative electrode substrate, the active material disposed is a negative electrode active material. The external electrode layer POLo including the positive electrode substrate may be disposed adjacent to the internal electrode layer POLi, which is a negative electrode layer, and the external electrode layer POLo including the negative electrode substrate may be disposed adjacent to the internal electrode layer POLi, which is a positive electrode layer.

The pressurizing pattern PTN, PTN1, PTN2 is at least a portion of the external electrode layer POLo and may be disposed across the patterned portion PA to be described below with reference to FIG. 8. Referring to FIG. 7A, the pressurizing pattern PTN may be disposed on a protrusion where a positive electrode tab or a negative electrode tab is formed. Referring to FIG. 7B, the pressurizing pattern PTN1, PTN2 may also be formed on at least one of a protrusion where a positive electrode tab or a negative electrode tab is formed, and a flat portion in a direction opposite to the protrusion.

Meanwhile, the active material of the external electrode layer POLo may be disposed to have a length shorter than that of the inner metal substrate SB1 with respect to the second direction DR2.

Different materials may be disposed on the inner surface and the outer surface of the external electrode layer POLo. An active material may be disposed on the inner surface of the external electrode layer POLo, and pressurizing pattern PTN, PTN1, PTN2 may be disposed on the outer surface of the external electrode layer POLo.

The internal electrode layer POLi may include an inner metal substrate SB1 and active materials disposed on the inner and outer surfaces thereof. The internal electrode layer POLi may be a positive electrode layer or a negative electrode layer. The negative electrode layer may include a negative electrode substrate, and negative electrode active materials disposed on inner and outer surfaces of the negative electrode substrate. The substantially same active material may be disposed on the inner and outer surfaces of the internal electrode layer POLi. For example, the positive electrode layer may include a positive electrode substrate, and positive electrode active materials disposed on inner and outer surfaces of the positive electrode substrate. The active material may be disposed to have a shorter length than the metal substrate with respect to the second direction DR2. Meanwhile, the positive electrode layers and the negative electrode layers included in the internal electrode layer POLi are alternately disposed along the third direction DR3, and an negative electrode active material may be disposed on one of the plurality of external electrode layers POLo disposed adjacent to the negative electrode layer, and a positive electrode active material may be disposed on one of the plurality of external electrode layers POLo disposed adjacent to the negative electrode layer.

The separation layers INL may be disposed between the electrode layers to physically separate active materials having different polarities from each other to prevent physical contact therebetween. The separation layers INL may be formed to have a larger area than the internal electrode layer POLi and the external electrode layer POLo.

The battery stack may be received in the battery receptor 330a, 330b, 430a, 440b. The battery receptor 330a, 330b, 430a, 440b may include an upper receptor 330a, 430a and a lower receptor 330b, 430b. The upper receptor 330a, 430a may be disposed on an upper side (e.g., in the DR3(Z) direction) of the battery stack, and the lower receptor 330b, 430b may be disposed on a lower side (e.g., in the DR3(-Z) direction) of the battery stack. The upper receptor 330a, 430a and the lower receptor 330b, 430b may surround the battery stack along the third direction DR3.

The upper receptor 330a, 430a and the lower receptor 330b, 430b are connected to each other, and the upper receptor 330a, 430a and the lower receptor 330b, 430b may apply a force to the pressurizing pattern PTN, PTN1, PTN2 in the third direction DR3. For example, the battery receptor 330a, 330b, 430a, 430b may receive the battery stack to physically contact the pressurizing pattern PTN, PTN1, PTN2 and continuously apply the force in the inner surface direction to the battery stack.

Referring to FIGS. 7A, 7B, and 8, the battery stack may be divided/partitioned into a patterned area PA and a non-patterned area NPA. Hereinafter, for convenience of description, the cross-section of the pressurizing pattern PTN taken along A-A' is described, and substantially the same patterned area and non-patterned area may be formed in the cross-section of the pressurizing patterns PTN1 and PTN2 illustrated in FIG. 7B.

The battery stack may include an internal electrode layer POLi and an external electrode layer POLo. Internal positive electrode layers and internal negative electrode layers alternately disposed may be disposed between the external electrode layers POLo. A pressurizing pattern PTN may be disposed between the external electrode layer POLo and the battery receptor.

In an embodiment, the pressurizing pattern PTN may be disposed on the outer surface of the external electrode layer POLo across the patterned area PA, and the active materials AMa, AMb may be disposed across the non-patterned area NPA and an area from the non-patterned area NPA to at least a portion of the patterned area PA. Here, the internal electrode layer POLi includes, but is not limited to, an internal metal substrate SB1a, SB1b and active materials AMa, AMb formed on the two opposite surfaces of the internal metal substrate SB1a, SB1b, and the active materials AMa, AMb formed on the two opposite surfaces of each internal metal substrate may have the same polarity.

With respect to the patterned area PA, the external electrode layer POLo may include a pressurizing pattern PTN. The pressurizing pattern PTN may be formed on the outer surface of the external electrode layer POLo across the patterned area PA. With respect to the non-patterned area NPA, a pressurizing pattern PTN may not be formed on the external electrode layer POLo, and the external metal substrate SB2 may be exposed to the outside of the external electrode layer POLo.

In the case, the area of the pressurizing pattern PTN, PTN1, PTN2 disposed on the outer surface of the external electrode layer POLo may be larger than the area of the outer metal substrate SB1 exposed on the inner surface of the external electrode layer POLo. Further, the area of the external metal substrate SB2 exposed on the outer surface of the external electrode layer POLo may be smaller than the area of the active material disposed on the inner surface of the external electrode layer POLo.

With respect to the patterned area PA, a spacing step may be formed between the internal electrode layers POLi. A separation layer INL may be disposed between the internal electrode layers POLi. A separation layer INL may be disposed between the external electrode layer POLo and the internal electrode layer POLi. Further, since the active materials disposed on the two opposite surfaces of the internal electrode layer POLi are not formed across the entire internal electrode layer POLi, the active materials disposed on the two opposite surfaces of the internal electrode layer POLi with respect to the second direction DR2 may be disposed to have a shorter length than the metal substrate (e.g., the first inner metal substrate SB1a or the second inner metal substrate SB1b) of the internal electrode layer POLi.

Accordingly, a spacing step may be formed between the first internal metal substrate SB1a and the separation layer INL. Further, a spacing step may be formed between the second internal metal substrate SB1b and the separation layer INL. Further, the active materials (e.g., the negative electrode active material AMb) disposed on the two opposite surfaces of the first inner metal substrate SB1a may reduce in thickness toward the edge due to the spread of the active material in the patterned area PA. The active materials (e.g., the positive electrode active material AMa) disposed on the two opposite surfaces of the second internal metal substrate SB1b may also reduce in thickness toward the edge due to the spread of the active material in the patterned area PA. Further, the active material (e.g., the positive electrode active material AMa) disposed on the inner surface of the external metal substrate SB2 may also reduce in thickness toward the edge due to the spread of the active material in the patterned area PA.

As described above, according to an embodiment, a first spacing step may be formed between the external metal substrate SB2 and one of the plurality of adjacent separation layers INL, and a second spacing step may be formed between the internal metal substrates SB1a and SB1b and one of the plurality of adjacent separation layers INL. The first spacing step or the second spacing step may be at least partially decreased by a force in the inner surface direction applied by the battery receptor 330a, 330b, 430a, 430b.

Meanwhile, with respect to the non-patterned area NPA, an active material having a first thickness may be disposed between the outer metal substrate SB2 and one of the plurality of adjacent separation layers INL, and an active material having a second thickness may be disposed between the inner metal substrate SB1a, SB1b and one of the plurality of adjacent separation layers INL. In the case, the first spacing step based on the patterned area PA may be formed to have a length smaller than the first thickness. Further, as the force is applied by the battery receptor 330a, 330b, 430a, 430b, the first spacing step may be formed to be smaller than the first thickness of the active material, and the second spacing step may be formed to be smaller than or equal to the second thickness of the active material.

An external electrode layer POLo is disposed inside the upper receptor 330a, 430a and the lower receptor 330b, 430b. At least a portion of the battery receptor (e.g., the upper receptor 330a, 430a and the lower receptor 330b, 430b) may contact the pressurizing pattern PTN. The battery receptor may be coupled along the inner surface direction DR3(+Z, -Z), the battery receptor may apply a force to the pressurizing pattern PTN of the external electrode layer POLo, and the battery stack may be compressed in the direction of the applied force. As the force is applied to the battery stack, the spacing step due to the spread of the active material formed in the battery stack may be compensated. For example, a distance between an edge area of the active material AMa of the external electrode layer POLo and the separation layer INL or a distance from the active material of the internal electrode layer POLia and POLib may be decreased. Meanwhile, according to an embodiment, at least one of the external metal substrate SB2 or the internal metal substrate SB1a, SB1b may contain a flexible material to facilitate a change in the shape of the external electrode layer POLo or the internal electrode layer POLia, POLib due to an external force.

As described above, since the pressurizing pattern PTN, PTN1, PTN2 is formed on the outer surface, the external electrode layer POLo may compensate for a step due to the spread of the active material at the edge of the battery stack. At the edge of the battery stack, the active material may spread in the horizontal direction without staying uniform as in the center portion by the nature of the active material. The thickness of the active material is not uniform at the edge where the active material spread occurs, negatively affecting the binding force at the edge. In various embodiments of the disclosure, an external electrode layer with a pressurizing pattern is provided in the battery electrode body, and the pressurizing pattern provided in the area where the active material spread occurs may compensate for a step due to the spread by a pressure to the pressurizing pattern. As a result, for the battery according to various embodiments of the disclosure, unlike the conventional battery, the binding force at the edge may be enhanced.

Further, the pressurizing pattern PTN, PTN1, PTN2 is continuously subjected to vertical pressure while the battery stack is received in the battery receptor, continuously compensating for the step caused by the spread of the active material even after the battery is manufactured and distributed.

Further, a device according to various embodiments of the disclosure may be described as follows.

Referring to FIGS. 1 to 8, according to an aspect of the disclosure, in an electronic device including a battery, the battery may include a battery stack and a battery receptor 330a, 330b, 430a, 430b receiving the battery stack. The battery stack may include a plurality of electrode layers and a plurality of separation layers INL disposed between the plurality of electrode layers. The plurality of electrode layers may include a plurality of external electrode layers POLo and a plurality of internal electrode layers POLi disposed between the plurality of external electrode layers POLo. An active material AMa may be disposed on an inner surface of each of the plurality of external electrode layers POLo, and a pressurizing pattern PTN, PTN1, PTN2 may be disposed on an outer surface of each of the plurality of external electrode layers POLo. The battery receptor 330a, 330b, 430a, 430b may receive the battery stack to physically contact the pressurizing pattern PTN, PTN1, PTN2 and continuously apply a force in an inner surface direction to the battery stack.

According to an embodiment, the battery stack may be partitioned into a patterned area PA and a non-patterned area NPA. The pressurizing pattern PTN, PTN1, PTN2 may be disposed on an outer surface of the plurality of external electrode layers POLo across the patterned area PA. The active material AMa, AMb may be disposed across the non-patterned area NPA and an area from the non-patterned area NPA to at least a portion of the patterned area PA.

According to an embodiment, each of the plurality of external electrode layers POLo may include an external metal substrate SB2. Each of the plurality of internal electrode layers POLi may include an internal metal substrate SB1a, SB1b. In the patterned area PA, a first spacing step may be formed between the external metal substrate SB2 and adjacent one of the plurality of separation layers INL, and a second spacing step may be formed between the internal metal substrate SB1a, SB1b and adjacent one of the plurality of separation layers INL. The first spacing step may be at least partially decreased by the force in the inner surface direction applied by the battery receptor 330a, 330b, 430a, 430b.

According to an embodiment, in the non-patterned area NPA, an active material having a first thickness may be formed between the external metal substrate SB2 and adjacent one of the plurality of separation layers INL, and an active material having a second thickness may be formed between the internal metal substrate SB1a, SB1b and adjacent one of the plurality of separation layers INL. The first spacing step may be formed to have a smaller length than the first thickness.

According to an embodiment, as the force may be applied by the battery receptor 330a, 330b, 430a, 430b, the first spacing step may be formed to be smaller than the first thickness of the active material.

According to an embodiment, as the force may be applied by the battery receptor 330, the second spacing step may be formed to be smaller than or equal to the second thickness of the active material.

According to an embodiment, the battery receptor 330a, 330b, 430a, 430b may include an upper receptor 330a, 430a and a lower receptor 330b, 430b.

According to an embodiment, the upper receptor 330a, 430a may be coupled to the lower receptor 330b, 430b in the inner surface direction. The pressurizing pattern PTN, PTN1, PTN2 contacting the upper receptor 330a, 430a and the pressurizing pattern PTN, PTN1, PTN2 contacting the lower receptor 330b, 430b may apply a force to the battery stack in the inner surface direction.

According to an embodiment, an external metal substrate SB1 constituting each of the plurality of external electrode layers POLo may contain a flexible material.

According to an embodiment, the pressurizing pattern PTN, PTN1, PTN2 may contain an insulating material.

According to an embodiment, an area of the pressurizing pattern PTN, PTN1, PTN2 disposed on an outer surface of each of the plurality of external electrode layers POLo may be formed to be larger than an area of an external metal substrate SB1 exposed on an inner surface of each of the plurality of external electrode layers POLo.

According to an embodiment, an area of an external metal substrate SB2 exposed on an outer surface of each of the plurality of external electrode layers POLo may be formed to be smaller than an area of an active material disposed on an inner surface of each of the plurality of external electrode layers POLo.

According to an embodiment, the internal electrode layer POLi may include an internal metal substrate SB1a, SB1b and active materials AMa, AMb formed on two opposite surfaces of the internal metal substrate SB1a, SB1b. The active materials AMa, AMb have the same polarity.

According to an embodiment, the internal electrode layer POLi may include positive electrode layers and negative electrode layers. The positive electrode layers and the negative electrode layers may be alternately arranged along a height direction. A negative electrode active material may be disposed on one of the plurality of external electrode layers POLo, disposed adjacent to the positive electrode layers, and a positive electrode active material may be disposed on one of the plurality of external electrode layers POLo disposed adj acent to the negative electrode layers.

According to an aspect of the disclosure, a battery may comprise a battery stack and a battery receptor 330a, 330b, 430a, 430b receiving the battery stack. The battery stack may include a plurality of electrode layers and a plurality of separation layers INL disposed between the plurality of electrode layers. The plurality of electrode layers may include a plurality of external electrode layers POLo and a plurality of internal electrode layers POLi disposed between the plurality of external electrode layers POLo. An active material may be disposed on an inner surface of each of the plurality of external electrode layers POLo, and a pressurizing pattern PTN, PTN1, PTN2 may be disposed on an outer surface of each of the plurality of external electrode layers POLo. The battery receptor 330a, 330b, 430a, 430b may receive the battery stack to physically contact the pressurizing pattern PTN, PTN1, PTN2 and continuously apply a force in an inner surface direction to the battery stack.

The electronic device according to various embodiments may be one of various types of electronic devices. The electronic devices may include, for example, a display device, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, or hard disk) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a battery comprising:
a battery stack, and
a battery receptor (330a, 330b, 430a, 430b) receiving the battery stack,
wherein the battery stack includes a plurality of electrode layers and a plurality of separation layers (INL) disposed between the plurality of electrode layers,
wherein the plurality of electrode layers include a plurality of external electrode layers (POLo) and a plurality of internal electrode layers (POLi) disposed between the plurality of external electrode layers (POLo),
wherein an active material (AMa) is disposed on an inner surface of each of the plurality of external electrode layers (POLo), and a pressurizing pattern (PTN, PTN1, PTN2) is disposed on an outer surface of each of the plurality of external electrode layers (POLo), and
wherein the battery receptor (330a, 330b, 430a, 430b) receives the battery stack to physically contact the pressurizing pattern (PTN, PTN1, PTN2) and continuously apply a force in an inner surface direction to the battery stack.

2. The electronic device of claim 1,
wherein the battery stack is partitioned into a patterned area (PA) and a non-patterned area (NPA),
wherein the pressurizing pattern (PTN, PTN1, PTN2) is disposed on an outer surface of the plurality of external electrode layers (POLo) across the patterned area (PA), and
wherein the active material (AMa, AMb) is disposed across the non-patterned area (NPA) and an area from the non-patterned area (NPA) to at least a portion of the patterned area (PA).

3. The electronic device of claim 2,
wherein each of the plurality of external electrode layers (POLo) includes an external metal substrate (SB2),
wherein each of the plurality of internal electrode layers (POLi) includes an internal metal substrate (SB1a, SB1b),
wherein in the patterned area (PA), a first spacing step is formed between the external metal substrate (SB2) and adjacent one of the plurality of separation layers (INL), and a second spacing step is formed between the internal metal substrate (SB1a, SB1b) and adjacent one of the plurality of separation layers (INL), and
wherein the first spacing step is at least partially decreased by the force in the inner surface direction applied by the battery receptor (330a, 330b, 430a, 430b).

4. The electronic device of claim 3,
wherein in the non-patterned area (NPA), an active material having a first thickness is formed between the external metal substrate (SB2) and adjacent one of the plurality of separation layers (INL), and an active material having a second thickness is formed between the internal metal substrate (SB1a, SB1b) and adjacent one of the plurality of separation layers (INL), and
wherein the first spacing step is formed to have a smaller length than the first thickness.

5. The electronic device of claim 4, wherein as the force is applied by the battery receptor (330a, 330b, 430a, 430b), the first spacing step is formed to be smaller than the first thickness of the active material.

6. The electronic device of claim 4, wherein as the force is applied by the battery receptor (330), the second spacing step is formed to be smaller than or equal to the second thickness of the active material.

7. The electronic device of claim 1, wherein the battery receptor (330a, 330b, 430a, 430b) includes an upper receptor (330a, 430a) and a lower receptor (330b, 430b).

8. The electronic device of claim 7,
wherein the upper receptor (330a, 430a) is coupled to the lower receptor (330b, 430b) in the inner surface direction, and
wherein the pressurizing pattern (PTN, PTN1, PTN2) contacting the upper receptor (330a, 430a) and the pressurizing pattern (PTN, PTN1, PTN2) contacting the lower receptor (330b, 430b) apply a force to the battery stack in the inner surface direction.

9. The electronic device of claim 1, wherein an external metal substrate (SB1) constituting each of the plurality of external electrode layers (POLo) contains a flexible material.

10. The electronic device of claim 1, wherein the pressurizing pattern (PTN, PTN1, PTN2) contains an insulating material.

11. The electronic device of claim 1, wherein an area of the pressurizing pattern (PTN, PTN1, PTN2) disposed on an outer surface of each of the plurality of external electrode layers (POLo) is formed to be larger than an area of an external metal substrate (SB1) exposed on an inner surface of each of the plurality of external electrode layers (POLo).

12. The electronic device of claim 1, wherein an area of an external metal substrate (SB2) exposed on an outer surface of each of the plurality of external electrode layers (POLo) is formed to be smaller than an area of an active material disposed on an inner surface of each of the plurality of external electrode layers (POLo).

13. The electronic device of claim 1,
wherein each of the plurality of internal electrode layers (POLi) includes an internal metal substrate (SB1a, SB1b) and active materials (AMa, AMb) formed on two opposite surfaces of the internal metal substrate (SB1a, SB1b), and
wherein the active materials (AMa, AMb) have the same polarity.

14. The electronic device of claim 1,
wherein each of the plurality of internal electrode layers (POLi) includes positive electrode layers and negative electrode layers,
wherein the positive electrode layers and the negative electrode layers are alternately arranged along a height direction, and
wherein a negative electrode active material is disposed on one of the plurality of external electrode layers (POLo), disposed adjacent to the positive electrode layers, and a positive electrode active material is disposed on one of the plurality of external electrode layers (POLo) disposed adjacent to the negative electrode layers.

15. A battery (189, 201, 301, 401), comprising:
a battery stack (200); and
a battery receptor (330a, 330b, 430a, 430b) receiving the battery stack,
wherein the battery stack includes a plurality of electrode layers and a plurality of separation layers (INL) disposed between the plurality of electrode layers,
wherein the plurality of electrode layers include a plurality of external electrode layers (POLo) and a plurality of internal electrode layers (POLi) disposed between the plurality of external electrode layers (POLo),
wherein an active material is disposed on an inner surface of each of the plurality of external electrode layers (POLo), and a pressurizing pattern (PTN, PTN1, PTN2) is disposed on an outer surface of each of the plurality of external electrode layers (POLo), and
wherein the battery receptor (330a, 330b, 430a, 430b) receives the battery stack to physically contact the pressurizing pattern (PTN, PTN1, PTN2) and continuously apply a force in an inner surface direction to the battery stack.
